# EUROPEAN PATENT APPLICATION

(11) **EP 1 180 464 A2**
(43) Date of publication of application: **20.02.2002**
(21) Application number: 01119167.3
(22) Date of filing: 08.08.2001
(51) Int. Cl.: B62D 1/06

(54) **Steering wheel**

(30) Priority: 11.08.2000 JP 2000244696
(71) Applicant: NIHON PLAST CO., LTD., Fuji-shi, Shizuoka 417-0047 (JP)
(72) Inventor: Ochiai, Mikio, Nihon Plast Co., Ltd., Fuji-shi, Shizuoka 417-0047 (JP); Sugiyama, Toshiyuki, Nihon Plast Co., Ltd., Fuji-shi, Shizuoka 417-0047 (JP); Sato, Izumi, Nihon Plast Co., Ltd., Fuji-shi, Shizuoka 417-0047 (JP); Suzuki, Shinya, Nihon Plast Co., Ltd., Fuji-shi, Shizuoka 417-0047 (JP)
(74) Representative: Grünecker, Kinkeldey, Stockmair & Schwanhäusser Anwaltssozietät

(57) **Abstract**

A steering wheel has a core metal, a receptacle, and a weight. The core metal has a boss core metal connected to a steering shaft; a rim core metal; and a spoke core metal connecting the boss core metal and the rim core metal. The receptacle is disposed in the rim core metal. The receptacle is hollow and has an internal wall portion. The weight is movably received in the receptacle, and is allowed to impinge on the internal wall portion of the receptacle.

## Description

### BACKGROUND OF THE INVENTION

### 1. FIELD OF THE INVENTION

The present invention relates to a steering wheel having a weight (act as a damper) for improving vibration characteristics.

### 2. DESCRIPTION OF THE RELATED ART

Conventionally, a steering wheel for steering a motor vehicle and the like receives a vibration caused by engine revolution or a vibration transmitted from the road surface during vehicle travel. The steering wheel is fixed to an end of a steering shaft facing a seat occupant (driver), and is vibrated by the vibration which is thus caused or transmitted. Natural frequency of the steering wheel equaling frequency of the vibrations above exhibits the maximum vibration point (namely, resonance), to thereby vibrate the steering wheel intensely. Due to the thus caused maximum vibration, the seat occupant feels uncomfortable who grips the steering wheel for steering operation.

Japanese Utility Model Unexamined Publication No. Showa 62(1987)-64675 and Japanese Utility Model Unexamined Publication No. Heisei 2(1990)-129967 show a steering wheel containing a weight (act as a damper) which is supported by a rubber leg and constitutes a vibration controller for controlling (adjusting) the natural frequency of the steering wheel causing the resonance.

For obtaining damping effect, the constitutions described in the above two related arts have the following two features: Supporting the weight with the rubber leg, which weight is considerably great in mass and volume. Allowing the weight, that is, a load on the rubber leg, to move forward and rearward at predetermined strokes so as not to impinge on surrounding members. The above two features are responsible for increase in mass of the entire steering wheel.

In addition, the damper (vibration controller) occupies a great volume both in the above two related arts. More specifically, Japanese Utility Model Unexamined Publication No. Heisei 2(1990)-129967 shows that the vibration controller can be installed only in a limited space (such as a boss portion) in the steering wheel, while Japanese Utility Model Unexamined Publication No. Showa 62(1987)-64675 shows that the vibration controller is disposed in such a manner as to occupy an entire diameter of a rim portion.

However, the steering wheel requires installation of safety apparatus such as an air bag module and the like, and various types of operating mechanism including a horn switch. Moreover, disposing the weight at the rim portion or at a boss portion is of difficulty due to the need for uniform and soft touch feeling circumferentially along the rim portion during operation of the steering wheel, and need for bringing about a preferable design of the steering wheel.

Moreover, the boss portion is a base point for immovably securing the steering wheel to the steering shaft. Controlling vibration effectively is possible by strengthening the spoke portion and the rim portion which are spaced apart from the base point. The spoke portion and the rim portion, however, are required to preferably deform with an external force applied thereto. Quite a lot of prototypes and repeated experiments are required for obtaining a design having excellent compatibility of deformation and vibration, causing a huge amount of development cost as well as a long study period. In addition, there is provided a rim portion which partially combines a weight having a constitution quite different from the other portions of the weight. However, the partially combined weight of the rim portion is not practical since it involves a lot of potential technical problems to be solved.

### BRIEF SUMMARY OF THE INVENTION

It is an object of the present invention to provide a steering wheel improving a vibration characteristic with ease.

According to an aspect of the present invention, there is provided a steering wheel comprising a core metal, a receptacle, and a weight. The core metal comprises a boss core metal connected to a steering shaft; a rim core metal; and a spoke core metal connecting the boss core metal and the rim core metal. The receptacle is disposed in the rim core metal. The receptacle is hollow and has an internal wall portion. The weight is movably received in the receptacle, and is allowed to impinge on the internal wall portion of the receptacle.

The other objects and features of the present invention will be understood from the following description with reference to the accompanying drawings.

### BRIEF DESCRIPTION OF THE SEVERAL VIEWS OF THE DRAWINGS

Fig. 1 is a partially exploded perspective view of a steering wheel, according to embodiments of the present invention;
Fig. 2 is an exploded perspective view of the steering wheel with an air bag module and a lower cover separated from the steering wheel;
Fig. 3 is a cross section of the steering wheel taken along lines III-III in Fig. 1;
Fig. 4 is a cross section of the steering wheel taken along lines IV-IV in Fig. 1, according to a first embodiment;
Fig. 5 is a schematic showing how to measure a vibration characteristic of the steering wheel;
Fig. 6 is a graph showing the vibration characteristic of the steering wheel;
Fig. 7 is a cross section of the steering wheel taken along lines corresponding to the lines IV-IV in Fig. 1, according to a second embodiment;
Fig. 8 is a perspective view of a weight W of the steering wheel, according to a third embodiment;
Fig. 9 is a cross section of the steering wheel taken along lines corresponding to the lines IV-IV in Fig. 1, according to a fourth embodiment;
Fig. 10 is a cross section of the steering wheel taken along lines corresponding to the lines IV-IV in Fig. 1, according to a fifth embodiment;
Fig. 11 is a cross section of the steering wheel taken along lines corresponding to the lines IV-IV in Fig. 1, according to a sixth embodiment;
Fig. 12 is a cross section of the steering wheel taken along lines corresponding to the lines IV-IV in Fig. 1, according to a seventh embodiment;
Fig. 13 is a cross section of the steering wheel taken along lines corresponding to the lines IV-IV in Fig. 1, according to an eighth embodiment;
Fig. 14 is a cross section of the steering wheel taken along lines corresponding to the lines IV-IV in Fig. 1, according to a ninth embodiment;
Fig. 15 is a cross section of the steering wheel taken along lines corresponding to the lines IV-IV in Fig. 1, according to a tenth embodiment;
Fig. 16 is the steering wheel, according to an eleventh embodiment, in which,
Fig. 16A is a cross section of the steering wheel taken along lines corresponding to the lines IV-IV in Fig. 1, and
Fig. 16B is a perspective view of the steering wheel partially cut out;
Fig. 17 is a cross section of the steering wheel taken along lines corresponding to the lines IV-IV in Fig. 1, according to a twelfth embodiment;
Fig. 18 is a cross section of the steering wheel taken along lines corresponding to the lines IV-IV in Fig. 1, according to a thirteenth embodiment; and
Fig. 19 is a cross section of the steering wheel taken along lines corresponding to the lines IV-IV in Fig. 1, according to a fourteenth embodiment.

### DETAILED DESCRIPTION OF THE EMBODIMENT

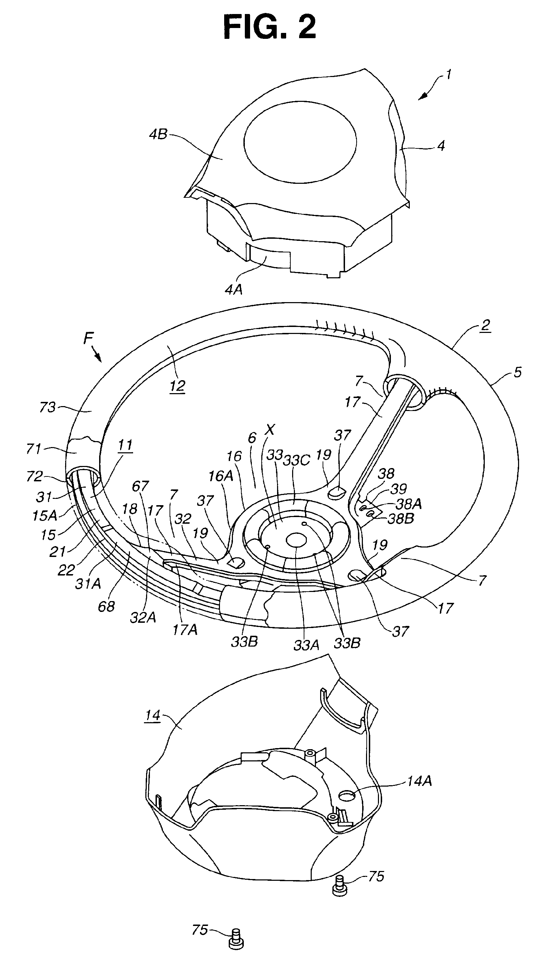

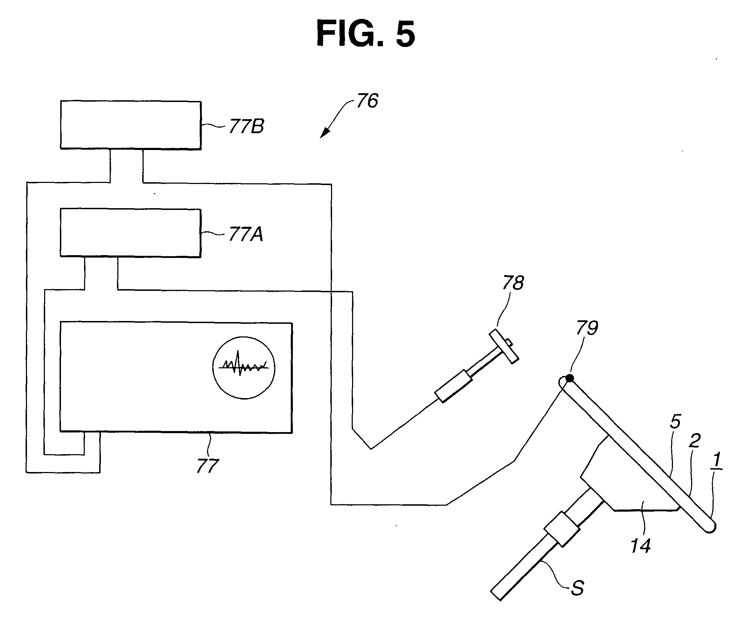

As is seen in Fig. 2 and Fig. 5, there is provided a steering wheel 1 for a motor vehicle. The steering wheel 1 comprises a steering wheel body 2, an air bag module 4 and the like. The air bag module 4 is a center pad, and is mounted on a side facing a seat occupant. The steering wheel 1 is mounted on a steering shaft S which is disposed on a vehicular body side. The steering shaft S is mounted to the motor vehicle normally in an inclined state. When the motor vehicle is travelling straightly, a position F is positioned substantially at an upper-and-forward end.

Hereinafter defined are orientations in the motor vehicle for describing the steering wheel 1:
"Upper side" is a side defining the air bag module 4, namely, a seat occupant side,
"Lower side" is a side defining the steering shaft S,
"Front side" is a side defining a front window glass of the motor vehicle, and
"Rear side" is a rear side of the motor vehicle.

Moreover, a core of the steering shaft S is referred to as an operation axis O.

The steering wheel body 2 has an overall configuration which is, for example, substantially circular. The steering wheel body 2 is constituted of a rim portion 5, a boss portion 6, and a spoke portion 7. The rim portion 5 is used for the purpose of gripping, and is therefore also referred to as a grip portion or a ring portion. The rim portion 5 is substantially circular. The boss portion 6 is disposed inside the rim portion 5, and is fixed to the steering shaft S. The spoke portion 7 connects the rim portion 5 and the boss portion 6, and is plural in number. More specifically, the spoke portion 7 is three in number in an embodiment of the present invention.

Moreover, the steering wheel body 2 is constituted of a core metal 11, a cover portion 12, and a lower cover 14. The cover portion 12 partially covers the core metal 11.

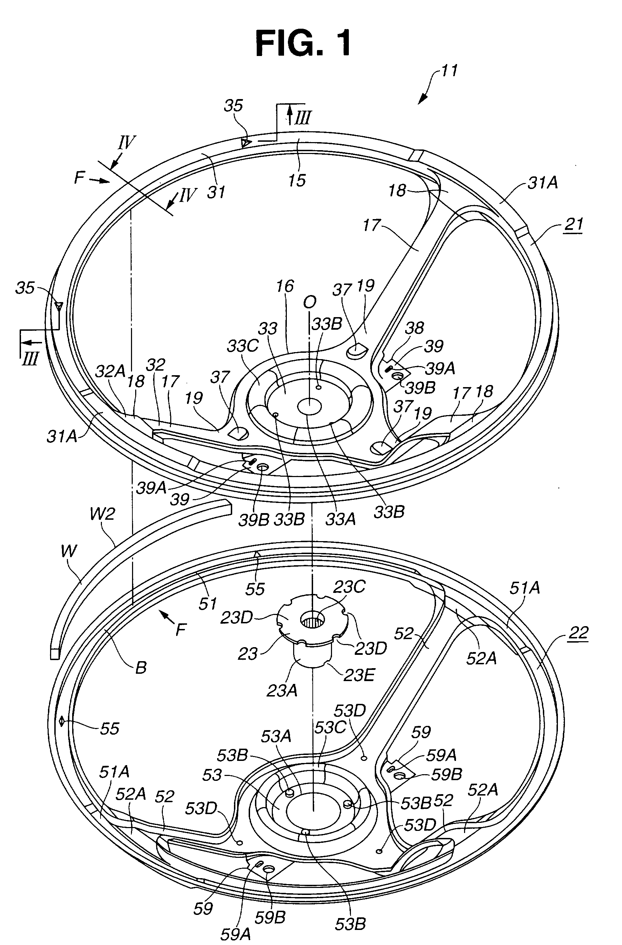

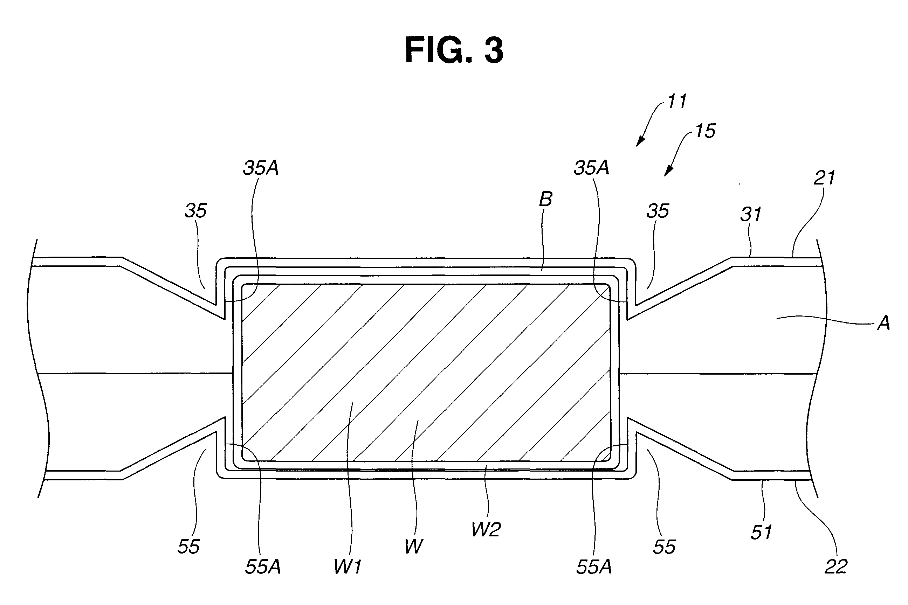

The core metal 11 is also referred to as a steering wheel core metal. As is seen in Fig. 1 to Fig. 4, the core metal 11 is constituted of a rim core metal 15, a boss core metal 16 (or a boss plate), and a spoke core metal 17. The rim core metal 15 reinforces the rim portion 5, in accordance with the overall configuration of the steering wheel body 2. The boss core metal 16 is disposed inside the rim core metal 15, and reinforces the boss portion 6. The spoke core metal 17 reinforces the spoke portion 7, and connects the rim core metal 15 and the boss core metal 16. The spoke core metal 17 is plural in number. More specifically, the spoke core metal 17 is three in number in the embodiment. The core metal 11 also has an upper shell 21 (or a first half shell) facing the seat occupant, and a lower shell 22 (or a second half shell) facing the vehicular body. Combining the upper shell 21 and the lower shell 22 forms a hollow portion A, as is seen in Fig. 3. The hollow portion A is literally hollow in shape, and partially includes a weight receptacle B for receiving a weight W. The rim core metal 15 and the boss core metal 16 are hollow in shape each of which has a cross section substantially shaped into a closed tube. As is seen in Fig. 1 and Fig. 2, a boss body 23 is fixed to the boss core metal 16. The boss body 23 has a hollow portion defining an inside for fixedly gripping a part of the steering shaft S. Moreover, there are defined an external connection portion 18 for connecting the rim core metal 15 and the spoke core metal 17, and an internal connection portion 19 for connecting the boss core metal 16 and the spoke core metal 17.

Each of the upper shell 21 and the lower shell 22 is of a pressed steel plate which is formed in such a manner that an SPCE steel (steel sheets for deep drawing) plate having a thickness of 1.0 mm is subjected to a deep drawing, to thereby form the respective upper shell 21 (monolithic) and lower shell 22 (monolithic). The upper shell 21 and the lower shell 22 are connected by way of a rim edge connection 15A, a spoke edge connection 17A, and a boss edge connection 16A. As is seen in Fig. 2, the rim edge connection 15A is disposed along an external periphery and an internal periphery of the rim core metal 15. The spoke edge connection 17A is disposed along both sides of the spoke core metal 17. The boss edge connection 16A is disposed along an external periphery of the boss core metal 16.

The upper shell 21 has a rim upper portion 31, a spoke upper portion 32, and a boss upper portion 33. In the center of the boss upper portion 33, there is defined a circular hole 33A. As is seen in Fig. 1, around the circular hole 33A, there are provided a plurality of protrusions 33B protruding downward which are, for example, three in number and disposed at regular angular intervals. Moreover, around the circular hole 33A and outside the protrusions 33B, there is provided an upper connection 33C. The upper connection 33C is a circular protrusion protruding upward, and has a cross section shaped substantially into alphabetical "U". The upper connection 33C is substantially concentric with the circular hole 33A. The upper connection 33C has an outside and an inside which is disposed lower than the outside. Moreover, as is seen in Fig. 1, there is provided a seat portion 37 which is three in number; more specifically, two on the right and left sides of the boss upper portion 33 and one on the rear side of the boss upper portion 33. The seat portion 37 controls height of the air bag module 4, and protrudes upward.

The spoke upper portion 32 extends upward (in an inclined state) from the boss upper portion 33. More specifically, one spoke upper portion 32 extends from each of the right and left sides of the boss upper portion 33, and one spoke upper portion 32 extends from the rear side of the boss upper portion 33. In the longitudinal direction of the extension, the spoke upper portion 32 is substantially constant in width. In the vicinity of the external connection portion 18, the spoke upper portion 32 is, however, formed with an upper thick portion 32A which is increased smoothly in width continuously toward the external connection portion 18.

Moreover, as is seen in Fig. 1, the rim upper portion 31 is substantially flat and circular. In the vicinity of the external connection portion 18 on each of the right and left sides, there is provided an upper thick portion 31A having a height greater than other portions of the rim upper portion 31.

Moreover, the rim upper portion 31 is provided with a pair of an upper first bead 35 and an upper second bead 35 which are disposed, respectively, on a right side of a position F and a left side of the position F. The position F is the remotest from each of the right external connection portion 18 and the left external connection portion 18, and is disposed substantially in the center of the right external connection portion 18 and the left external connection portion 18. The upper first bead 35 and the upper second bead 35 have a predetermined distance therebetween circumferentially along the rim portion 5, and protrude downward toward the rim core metal 15. Each of the upper first bead 35 and the upper second bead 35 is monolithic with the rim upper portion 31, is substantially triangular in plan view, and defines an engagement surface 35A which is substantially vertical and constitutes an internal wall portion. The engagement surface 35A of the upper first bead 35 and the engagement surface 35A of the upper second bead 35 oppose each other.

Moreover, in the vicinity of the internal connection portion 19 on each of the right and left sides, there is provided an upper bracket 39. The upper bracket 39 is integrated with and continuous with the boss upper portion 33 and the spoke upper portion 32, and constitutes a mount seat 38. Moreover, each upper bracket 39 has flat plate shape, and is formed with a plurality of through holes, that is, a through hole 39A and a through hole 39B.

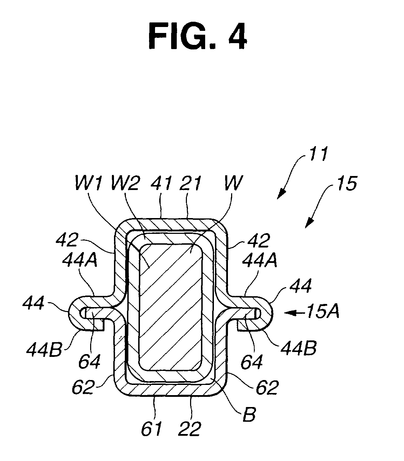

Moreover, as is seen in Fig. 4, each of the rim upper portion 31, the spoke upper portion 32, and the boss upper portion 33 has an edge which is formed with a base portion 41 and a wall portion 42. The base portion 41 is flat. The wall portion 42 extends downward from the edge. The wall portion 42 has a lower end which is formed with a wrapper 44 continuously. The wrapper 44 is plastic, and is constituted of an upper flange 44A and a rolled fixture 44B. The upper flange 44A is a flat plate (horizontal). The rolled fixture 44B extends downward from an external periphery of the upper flange 44A.

On the other hand, the lower shell 22 has a rim lower portion 51, a spoke lower portion 52, and a boss lower portion 53. In the center of the boss lower portion 53, there is defined a circular hole 53A which is larger in diameter than the circular hole 33A defined in the boss upper portion 33. As is seen in Fig. 1, around the circular hole 53A, there are provided a plurality of protrusions 53B protruding upward which are, for example, three in number and disposed at regular angular intervals. Each of the protrusions 53B is shifted by 60 degrees relative to one of the protrusions 33B of the boss upper portion 33. Moreover, around the circular hole 53A and outside the protrusions 53B, there is provided a lower connection 53C. The lower connection 53C is a circular protrusion protruding upward, and has a cross section shaped substantially into alphabetical "U". The lower connection 53C is substantially concentric with the circular hole 53A. The lower connection 53C of the lower shell 22 is smaller in external diameter and larger in internal diameter than the upper connection 33C of the upper shell 21, so that the lower connection 53C can be engaged with and received in the upper connection 33C. Moreover, in the vicinity of the internal connection portion 19, more specifically, on each of the right side, left side and the rear side of the boss upper portion 33, there is defined a hole 53D for screwing down on a self-tapping screw (not shown).

Moreover, the spoke lower portion 52 extends upward (in an inclined state) from the boss lower portion 53. More specifically, one spoke lower portion 52 extends from each of the right and left sides of the boss lower portion 53, and one spoke lower portion 52 extends from the rear side of the boss lower portion 53. In the longitudinal direction of the extension, the spoke lower portion 52 is substantially constant in width. In the vicinity of the external connection portion 18, the spoke lower portion 52 is, however, formed with a lower large portion 52A which is increased smoothly in width continuously toward the external connection portion 18.

Moreover, as is seen in Fig. 1, the rim lower portion 51 is substantially flat and circular. In the vicinity of the external connection portion 18 on each of the right and left sides, there is provided a lower large portion 51A having a height greater than other portions of the rim lower portion 51.

Moreover, the rim lower portion 51 is provided with a pair of a lower first bead 55 and a lower second bead 55 which are disposed, respectively, on the right side of the position F and the left side of the position F. The position F is the remotest from each of the right external connection portion 18 and the left external connection portion 18, and is disposed substantially in the center of the right external connection portion 18 and the left external connection portion 18. The lower first bead 55 and the lower second bead 55 have a predetermined distance therebetween circumferentially along the rim portion 5, and protrude upward toward the rim core metal 15. Each of the lower first bead 55 and the lower second bead 55 is monolithic with the rim lower portion 51, is substantially triangular in plan view, and defines an engagement surface 55A which is substantially vertical and constitutes an internal wall portion. The engagement surface 55A of the lower first bead 55 and the engagement surface 55A of the lower second bead 55 oppose each other.

Moreover, in the vicinity of the internal connection portion 19 on each of the right and left sides, there is provided a lower bracket 59. The lower bracket 59 is integrated and continuous with the boss lower portion 53 and the spoke lower portion 52, and constitutes the mount seat 38. Moreover, each lower bracket 59 is a flat plate, and is formed with a plurality of through holes, that is, a through hole 59A and a through hole 59B.

Moreover, as is seen in Fig. 4 (showing the rim core metal 15), each of the rim lower portion 51, the spoke lower portion 52, and the boss lower portion 53 has an edge which is formed with a base portion 61 and a wall portion 62. The base portion 61 is flat. The wall portion 62 extends upward from the edge. The wall portion 62 has an upper end which is formed with a flange portion 64 continuously. The flange portion 64 is a flat plate (horizontal).

An iron material is formed into the boss body 23 through forging, casting, cutting (with a numerical control machine tool), or the like. According to this embodiment, the boss body 23 is so produced through forging as to have monolithic portions such as a tubular portion 23A which is substantially cylindrical and a flange portion 23B which is substantially a circular plate. The tubular portion 23A has an internal surface formed therein with a serration 23C for meshing with undulating protrusions which are formed around an external circumference at a tip end of the steering shaft S. Moreover, the flange portion 23B has an external circumference formed with six notch portions 23D which are disposed at regular angular intervals and each of which is substantially semi-circular. Moreover, the tubular portion 23A has a lower end formed with a cancel portion 23E which is substantially rectangular and depressed. The cancel portion 23E is engaged with a cancel pin for automatically recovering an operation lever for operating turn signal lamp (direction indicator), which operation lever is disposed on a side defining a steering column (not shown).

The core metal 11 is so constituted that the upper shell 21 and the lower shell 22 face each other and are coupled with each other, putting therebetween the boss body 23. At the front end of the rim core metal 15, the rim upper portion 31 and the rim lower portion 51 define therebetween the hollow portion A which partially includes the weight receptacle B, with the engagement surface 35A (of the bead 35) and the engagement surface 55A (of the bead 55) disposed at each of the right and left ends in a longitudinal direction of the rim core metal 15.

Moreover, the weight W received in the weight receptacle B is a rod body which is a circular arc in shape, and has a curvature same as that of the rim core metal 15. The weight W has a rectangular cross section, and is constituted of a weight body W1 and a cover member W2. The cover member W2 covers substantially an entire external surface of the weight body W1, and acts as a silencer. The weight W has an external configuration which is slightly smaller than an internal configuration of the weight receptacle B. More specifically, according to the embodiment, the gap formed between an external surface of the weight W and an internal wall portion of the rim core metal 15 is 0.5 mm on one side. In other words, the external configuration of the weight W is smaller by 1 mm than the internal configuration of the rim core metal 15 in height, width, and overall length (along the circular arc). The weight W is not connected to the weight receptacle B (that is, rim core metal 15), but is received in the rim core metal 15 in such a manner that the weight W is movable at least at a predetermined stroke circumferentially along the rim portion 5. In other words, the weight W is swingable in the weight receptacle B, and is so received as to impinge on the internal wall portion of the rim core metal 15.

The weight body W1 is made of metal such as iron, lead, copper, brass and the like which is subjected to casting, extrusion molding, bending and the like. Otherwise, the weight body W1 is made of ceramic.

The cover member W2 is made of various kinds of rubber materials such as silicone rubber, natural rubber (NR), ethylene propylene rubber {(or ethylene propylene dien monomer (EPDM)}, styrene butadiene rubber (SBR), chloroprene rubber (CR), isobutylene isoprene rubber (IIR), urethane rubber and the like. Otherwise, the cover member W2 can be made of soft plastic materials such as Estane (trade name, The B. F. Goodrich Company: polyurethane elastomer), Hytrel (trade name, DU PONT - TORAY CO., LTD.: polyester elastomer), Sumitomo TPE (trade name, Sumitomo Chemical Co., Ltd.: polyolefin elastomer etc.). According to the embodiment, the cover member W2 is made of silicone rubber having a hardness 50 (JIS-A), where JIS stands for Japanese Industrial Standard. Preferable hardness of the cover member W2 is in a range from JIS-A 30 to JIS-A 90.

The cover member W2 is molded, for example, in the following manner: The weight body W1 is inserted in a metal mold. The cover member W2 is subjected to press molding, injection molding and the like, so that the cover member W2 is molded (adhered) integrally with the weight body W1.

Production process of the core metal 11 is described sequentially as follows:
1. Put the boss body 23 between the boss upper portion 33 of the upper shell 21 and the boss lower portion 53 of the lower shell 22.
2. Put the weight W in the weight receptacle B between the rim upper portion 31 and the rim lower portion 51.
3. Overlap the upper shell 21 with the lower shell 22, making sure the following points.

i) The tubular portion 23A of the boss body 23 protrudes downward from the circular hole 53A of the boss lower portion 53.
ii) The flange portion 23B is put between the boss upper portion 33 and the boss lower portion 53.
iii) Three of the six notch portions 23D (more specifically, every other notch portion 23D) are engaged with the protrusions 33B from upper side and protrusions 53B from lower side, to thereby determine rotational position of the upper shell 21, the lower shell 22 and the boss body 23.

As is seen in Fig 4 showing the rim core metal 15, with the upper shell 21 and the lower shell 22 overlapped, the flange portion 64 disposed along the edge of the lower shell 22 is received in the wrapper 44 disposed along the edge of the upper shell 21. Under this condition, the rolled fixture 44B of the wrapper 44 is subjected to hemming, to thereby couple the upper shell 21 with the lower shell 22. More specifically, an automatic hemming machine inclines the rolled fixture 44B (vertical wall) inward. Then, force is further applied to the rolled fixture 44B, to thereby bend the rolled fixture 44B to such an extent that the rolled fixture 44B parallels the flange portion 64 of the lower shell 22 and wraps the flange portion 64. As a result, the rim edge connection 15A is formed, to thereby couple the upper shell 21 with the lower shell 22. Under this condition, each of the rim core metal 15 and the spoke core metal 17 has a cross section shaped substantially into a closed tube, and has an inside formed with the hollow portion A and the weight receptacle B. Otherwise, for example, the rim edge connection 15A of the rim core metal 15 can be formed into depression through punching at predetermined distance to engage the upper shell 21 with the lower shell 22 so that the thus engaged upper shell 21 and the lower shell 22 can be deterred from making a circumferential rotation.

In terms of the boss core metal 16, the upper connection 33C is closely engaged with the lower connection 53C in such a manner that the lower connection 53C is received in the upper connection 33C. Moreover, the upper connection 33C and the lower connection 53C are "fixed" to each other, not to say "secured." Herein, the quoted two verbs are specifically distinguished as described in the following one sentence: That is, "secure" means two or more members integrated securely (through welding and the like), while "fix" means two or more members keeping a predetermined position relative to each other permanently. There is defined a middle weak portion X which is disposed inside the upper connection 33C and the lower connection 53C, and is disposed outside the boss body 23. The middle weak portion X is so weak as to be deformed with an external force applied in some degree. The middle weak portion X has a cross section which is larger in width and smaller in height than the cross section of a hollow portion of each of the rim core metal 15 and the spoke core metal 17. More specifically, the middle weak portion X is smaller in height along the operation axis O, while larger in width along a direction perpendicular to the operation axis O.

Moreover, the boss body 23 is secured to the lower shell 22 in a predetermined position through spot welding and the like. In addition to being secured to one of the upper shell 21 and the lower shell 22, the boss body 23 can be secured to both of the upper shell 21 and the lower shell 22.

Under this condition, a large spoke 67 is formed in the spoke core metal 17 in such a manner as to be continuous with the external connection portion 18 connecting the rim core metal 15 and the spoke core metal 17, as is seen in Fig. 2. The large spoke 67 is larger in width and cross section than other portions. Moreover, on each of the right side and the left side of the rim core metal 15, there is formed a large rim 68 in such a manner as to be continuous with the external connection portion 18. The large rim 68 is larger in height and cross section than the other portions.

Moreover, under this condition, the upper bracket 39 and the lower bracket 59 are so adjusted to be overlapped, to thereby form the mount seat 38. The mount seat 38 has a positioning hole 38A (Fig. 2) for communicating the through hole 39A with the through hole 59A, and a mount hole 38B (Fig. 2) for communicating the through hole 39B and the through hole 59B.

The thus constituted core metal 11 is fitted with the cover portion 12 and the lower cover 14, to thereby constitute the steering wheel body 2, as is seen in Fig. 2.

The cover portion 12 is constituted of an upper rim cover 71 and a lower rim cover 72 for covering the rim core metal 15 and a part of the spoke core metal 17. The upper rim cover 71 and the lower rim cover 72 are made of polypropylene resin and the like, and are formed through injection molding. Moreover, if necessary, an outer skin member 73 is wound and seamed on an external periphery of the upper rim cover 71 and the lower rim cover 72 for covering the entire upper rim cover 71 and the lower rim cover 72. The outer skin member 73 is the one that is made of a natural leather such as cattle hide, an artificial leather and the like.

Moreover, the lower cover 14 is, for example, made of synthetic rubber, and is so integrally formed as to cover the boss core metal 16 and a part of the spoke core metal 17. The self-tapping screw (not shown) is inserted into a predetermined through hole from lower side of the lower cover 14, and is screwed into the hole 53D of the lower shell 22 for fixation. The seat portion 37 of the upper shell 21 opposing the hole 53D of the lower shell 22 prevents the self-tapping screw (thread) from abutting on the upper shell 21, even when the self-tapping screw (thread) protrudes upward through the hole 53D.

Moreover, the lower cover 14 is formed with an operation hole 14A opposing the mount seat 38 of the core metal 11.

The air bag module 4 has a metallic base plate 4A mounting an air bag (not shown) and an inflator for supplying the air bag with gas. Moreover, the air bag module 4 is constituted of a cover body 4B for covering upper side of the air bag module 4. The cover body 4B fractures with pressure which is generated when the air bag is inflated. A pair of nut portions having a downward screw hole are secured to the base plate 4A. In the vicinity of the nut portion, there is provided a positioning protrusion.

The air bag module 4 is overlapped on the boss core metal 16 of the core metal 11. Then, the base plate 4A is so positioned in the direction of height as to abut on the seat portion 37 of the upper shell 21. Simultaneously with this, the above positioning protrusion is inserted into the positioning hole 38A of the mount seat 38, to thereby determine horizontal position (lateral direction). The through hole 39A and the through hole 59A constitute the positioning hole 38A. The through hole 59A of the lower shell 22 is formed larger than the through hole 39A of the upper shell 21, so that the positioning protrusion inserted into the through hole 39A does not abut on the lower shell 22 (in other words, free from interference with the lower shell 22). Then, under this condition, a bolt 75 inserted from the lower side by way of the operation hole 14A of the lower cover 14 is screwed into the nut portion of the base plate 4A by way of the mount hole 38B of the mount seat 38, to thereby fix the air bag module 4 to the steering wheel body 2. As a result, the steering wheel 1 is constituted.

In case of vehicle collision, the air bag module 4 operates in such a manner that the air bag is inflated in front of the seat occupant, then restricts the seat occupant (who is forced forward) so as to relieve the seat occupant from shock. Irrespective of the operation of the air bag, when the seat occupant impinge on the steering wheel 1, the core metal 11 is deformed, in other words causes self-aligning, to thereby absorb the shock. The external periphery of the boss core metal 16 is reinforced by the upper connection 33C and the lower connection 53C, and each of the rim core metal 15 (continuous with the upper connection 33C and the lower connection 53C) and the spoke core metal 17 (continuous with the upper connection 33C and the lower connection 53C) is shaped into a closed tube. Moreover, a wrapping connection constitutes a rib constitution, to thereby increase strength. Moreover, the external connection portion 18 connecting the rim core metal 15 with the spoke core metal 17 is formed with the large spoke 67 and the large rim 68 each of which has an enlarged cross section. The large spoke 67 has the enlarged cross section which is smoothly sectorial. The thus obtained large spoke 67 and large rim 68 restrict stress concentration which may occur to the external connection portion 18. Thereby, the periphery of the flange portion 23B of the boss body 23 of the boss core metal 16 is weakened, so that deformation is concentrated on the periphery of the flange portion 23B. Thereby, the entire configuration of the steering wheel body 2 is maintained, in other words, deformation caused by the external force is preferably adjusted. Simultaneously with this, what is called a root of the spoke core metal 17 is changed in angle, to thereby absorb shock. The above summarizes that shock absorption is improved with ease.

Described below is how to measure vibration frequency of the steering wheel 1, according to the embodiment of the present invention.

As is seen in Fig. 5, there is provided a measurement equipment 76 used for measuring the vibration frequency of the steering wheel 1. The measurement equipment 76 is constituted of an FET analyzer 77 (field effect transistor analyzer 77), and a power unit 77A and a sensor amplifier 77B which are electrically connected to the FET analyzer 77. Moreover, an impulse hammer 78 is mechanically connected to the power unit 77A so that the impulse hammer 78 is moved forward and backward, while a pick up sensor 79 is electrically connected to the sensor amplifier 77B.

The measurement equipment 76 detects vibration caused to the steering wheel 1, in the following manner:
1. With a predetermined force, the impulse hammer 78 hits the rim portion 5 of the steering wheel 1 which is fixed to the steering shaft S.
2. The pick up sensor 79 mounted on the rim portion 5 detects vibration caused to the steering wheel 1.

The thus detected vibration is inputted to the FET analyzer 77 by way of the sensor amplifier 77B, to thereby output waveform featuring vibration characteristic analyzed.

The steering wheel 1 used for the measurement is the one according to the embodiment described above. The upper shell 21 and the lower shell 22 constituting the core metal 11 is the steel plate having a thickness of 1.0 mm which has been subjected to press molding. The boss body 23 is forged. The core metal 11 containing the weight W is a little less than 1 kg in mass. The mass of the weight W according to the present invention is equivalent to a mass of a core metal (mass body 11) which is made of magnesium alloy and constituting a dynamic damper according to Japanese Utility Model Unexamined Publication No. Heisei 2(1990)-129967.

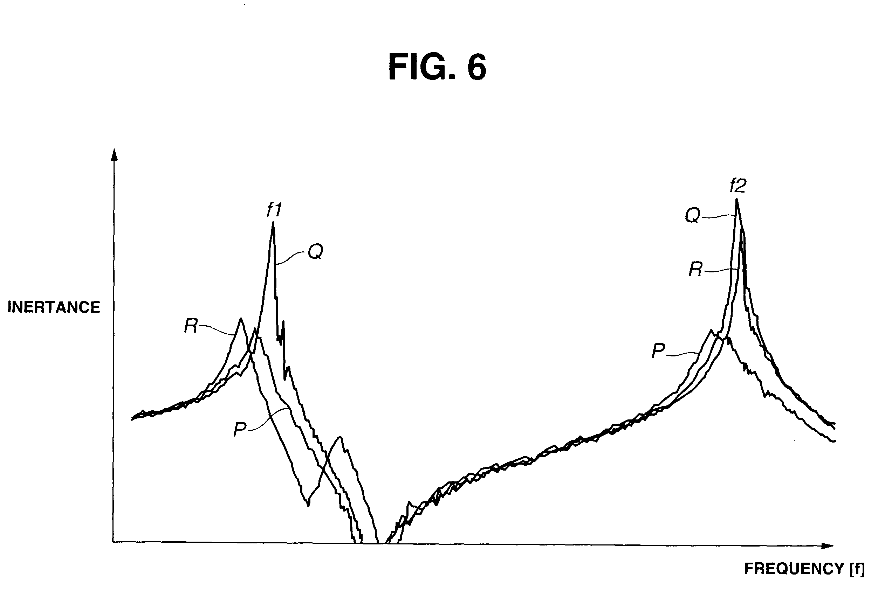

As is seen in Fig. 6, there is provided a graph showing characteristics obtained through the measurement. Ordinate shows inertance (= acceleration divided by force) while abscissa shows frequency. Line P shows a characteristic of the steering wheel 1, according to the embodiment. Line Q shows a characteristic of a steering wheel without the damping constitution. Line R shows a characteristic of a steering wheel with its boss portion mounting a dynamic damper 10 according to Japanese Utility Model Unexamined Publication No. Heisei 2(1990)-129967. A first peak f1 appears at about 30 Hz on the abscissa, and a second peak f2 appears at about 90 Hz on the abscissa. Resonance point during idling is normally in a range from 20 Hz to 40 Hz (although the resonance point depends on the individual motor vehicle). The resonance point during high speed vehicle travel is about 100 Hz.

The above measurement proves that the steering wheel 1 according to the embodiment damps vibration more than those having other constitutions at any vibration peak during assumed idling and high speed vehicle travel.

The vibration damping presumably operates in the following manner:

The weight W received (but not fixed) in the weight receptacle B of the core metal 11 is moved one moment after movement (vibration) of the core metal 11. Then, the weight W abuts on the internal wall of the weight receptacle B of the core metal 11. More specifically, the weight W causes a slight delay relative to reciprocating movement (vibration) of the core metal 11, to thereby make such a reciprocation as to prevent the core metal 11 from moving in the vibration direction.

This summarizes that the steering wheel 1 according to the embodiment effectively damps the vibration caused to the steering wheel 1, and flattens the vibration characteristic of the steering wheel 1 in such a manner as to cause no resonance point at any specific frequency. Moreover, securing a wide frequency band featuring such characteristic is possible with the steering wheel 1 above, to thereby improve operation feeling of the steering wheel 1.

According to the embodiment, the gap between the weight W and the internal wall of the weight receptacle B is preferably about 1.0 mm (both sides), more preferably about 0.6 mm (both sides), and at maximum 2.0 mm (both sides). The gap having the above dimension facilitates mounting the weight W to the rim core metal 15 having small width.

The rim core metal 15 (made of steel plate) impinging directly on the weight body W1 (metal rod such as iron) may cause noise. According to the embodiment, however, the weight body W1 is covered with the cover member W2 for restricting vibration stroke, to thereby reduce or prevent noise. Preferably, the cover member W2 should only prevent the noise, and should not damp energy of the weight body W1 to impinge on the internal wall of the core metal 11. For example, the cover member W2 is made of rubber. Otherwise, the cover member W2 may be a cloth or a non woven fabric which is adhered to a surface of the weight body W1. Moreover, the cover member W2 may be a long bag member having an inside for inserting the weight body W1, followed by closing an insertion hole by adhesion or suture. Moreover, the cover member W2 may be a string (or yarn) which is wound around the surface of the weight body W1, then is fixed with soft resin applied to the surface of the weight body W1 for fixing the wound string (or yarn).

In the rim core metal 15, the weight W, that is, the weight receptacle B is disposed in the remotest position from the connection portion 18 connecting the rim core metal 15 and the spoke core metal 17, to thereby damp vibration effectively.

The core metal 11 has a shell constitution overlapping and coupling the upper shell 21 and the lower shell 22. At least the rim core metal 15 forms the hollow portion A. Only providing the hollow portion A with the bead 35 and the bead 55 constitutes the weight receptacle B. The thus obtained core metal 11 has a simple constitution, causes reduced production cost, and makes light weight and higher strength more accessible. Moreover, using an internal space of the rim core metal 15 does not affect the configuration of the rim portion 5 (grip portion), to thereby secure excellent touch feeling, operability, and design of the steering wheel 1 with ease. Still furthermore, using the rim portion 5 for providing the weight receptacle B allows an effective use of space of the steering wheel 1 since the vibration damping constitution does not occupy the boss portion 6, or allows the steering wheel 1 to be small.

In this constitution of the rim portion 5, the constitution of the upper rim cover 71 and the lower rim cover 72 is not influenced by the weight W. Therefore, mounting the upper rim cover 71 and the lower rim cover 72 is easy, to thereby reduce production cost. Moreover, instead of being the one constituted of the upper rim cover 71 and the lower rim cover 72 having predetermined shape in advance, the cover portion 12 for covering the core metal 11 can be formed by forming polyurethane foam integrally around the core metal 11 through an insert molding. In this case, thickness of foam outer skin through the insert molding is not influenced by the weight W. More specifically, it is not necessary to reduce the thickness of the foam outer skin for mounting the weight W. With the foam outer skin not reduced in thickness, the operator keeps good touch feeling (free from what is called a bottoming feeling of the steering wheel 1).

With the hollow configuration formed by overlapping the upper shell 21 with the lower shell 22, the core metal 11 improves vibration characteristic, obtains better deformation characteristic easily, and facilitates design for making the vibration characteristic and the deformation characteristic compatible with each other.

Restricting vibration effectively reduces mass of the weight W. With this, the entire steering wheel 1 can be reduced in weight with ease. Moreover, the motor vehicle can be reduced in weight and moment of inertia can be reduced, to thereby improve operability with ease.

According to the embodiment, the steering wheel 1 is mounted to the steering shaft S in such a manner that connections (such as external connection portion 18) connecting the spoke portion 7 and the rim portion 5 are disposed circumferentially on a side defining a lower half of the rim portion 5, and thereby the steering wheel 1 secures a space (for viewing instruments) circumferentially at an upper and of the rim portion 5. The weight W disposed circumferentially at the upper end of the rim portion 5 (in other words, remotest from the connections) brings about a flat vibration characteristic in a frequency band wider than the dynamic damper 10 according to Japanese Utility Model Unexamined Publication No. Heisei 2(1990)-129967, restricts uncomfortable resonance attributable to normal engine operation and normal motor vehicle travelling {more specifically, from about 40 Hz (idling) to about 100 Hz (high-speed vehicle traveling)}, and allows improved operability to be compatible with good visibility of instruments.

In the damping constitution according to the embodiment, providing the weight W in accordance with various rim core metals 15 having different configurations is possible. In other words, basically the damping constitution is not influenced by the external configuration of the rim portion 5. Thereby, the damping constitution according to the embodiment is applicable to many different operating conditions of different motor vehicles, achieving great usefulness (or flexibility, general purpose).

Moreover, the weight W received in the weight receptacle B of the rim portion 5 adjusts balance of mass of the steering wheel 1, to thereby facilitate balancing the steering wheel 1 when the steering wheel 1 is rotated.

The embodiment described above is defined as a first embodiment, as is seen in Fig. 4. Configuration of the core metal 11 and the weight W is not limited to the one, according to the first embodiment. Other types of configurations can also be adopted.

Described below is the weight W, according to a second embodiment of the present invention.

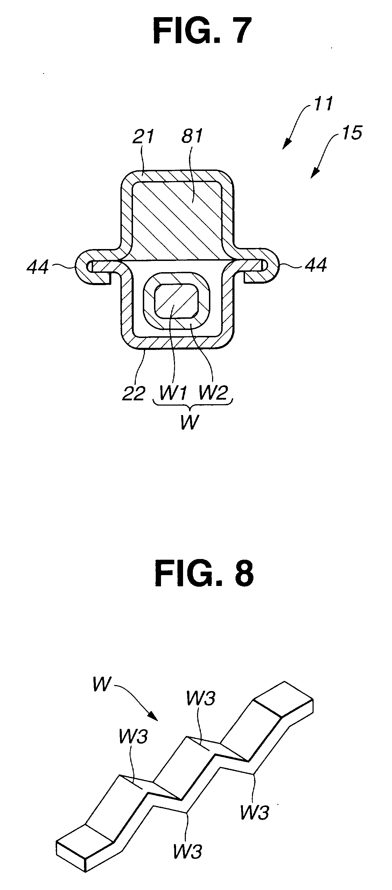

The weight receptacle B of the core metal 11 can partially have a separate member. More specifically, as is seen in Fig. 7, an insert 81 made of hard resin can be fixed and disposed on the upper shell 21 of the weight receptacle B. According to the second embodiment, the weight W is a rod thinner than the weight W according to the first embodiment in Fig. 4. The weight W in Fig. 7 abuts on the core metal 11 directly and by way of the insert 81, so as to adjust vibration characteristic.

Described below is the weight W, according to a third embodiment of the present invention.

Configuration of the weight W is not limited to the one along the internal surface of the weight receptacle B. More specifically, as is seen in Fig. 8, there is provided the weight W having substantially a zigzag {or triangular (undulating)} configuration formed with predetermined abutments W3. The abutments W3 abut on an upper internal wall and a lower internal wall of the weight receptacle B at predetermined strokes. Instead of being zigzag, the weight W can be rectangular (undulating), curved (undulating) and the like.

Described below is the weight W, according to a fourth embodiment of the present invention.

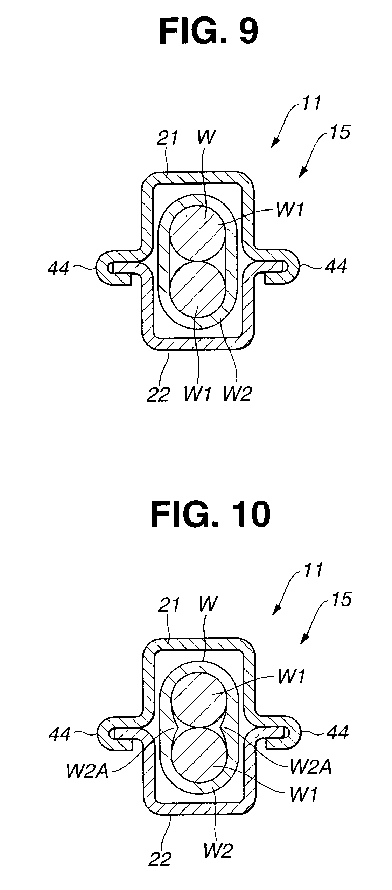

The weight W is constituted of a plurality of weight bodies W1. As is seen in Fig. 9, two weight bodies W1, each of which shaped into a round rod, are bound by the cover member W2 (also acts as a binder) at a plurality of binding portions in the longitudinal direction so as to constitute the weight W. For example, such binding portions include the center, the right end and the left end of the weight body W 1.

Described below is the weight W, according to a fifth embodiment of the present invention.

Instead of being a simple ring as is seen in Fig. 9, the cover member W2 can be the one as is seen in Fig. 10. There is provided a protrusion W2A protruding between the plurality of the weight bodies W1, to thereby stabilize the weight body W1.

Described below is the weight W, according to a sixth embodiment of the present invention.

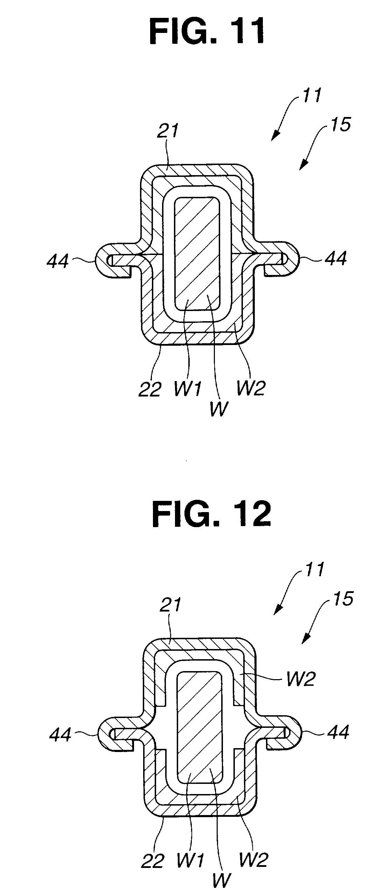

According to the embodiments above, the weight W is formed integrally with the cover member W2 that acts as a silencer. However, the silencer (cover member W2) can be the one that is separated from the weight body W1. More specifically, as is seen in Fig. 11, the weight body W is not fitted with the cover member W2. Instead, the cover member W2 is so disposed as to cover an entire internal surface of the weight receptacle B.

Described below is the weight W, according to a seventh embodiment of the present invention.

As is seen in Fig. 12 (similar to Fig. 11 but), the cover member W2 covers a part of the internal surface of the weight receptacle B.

Described below is the weight W, according to an eighth embodiment of the present invention.

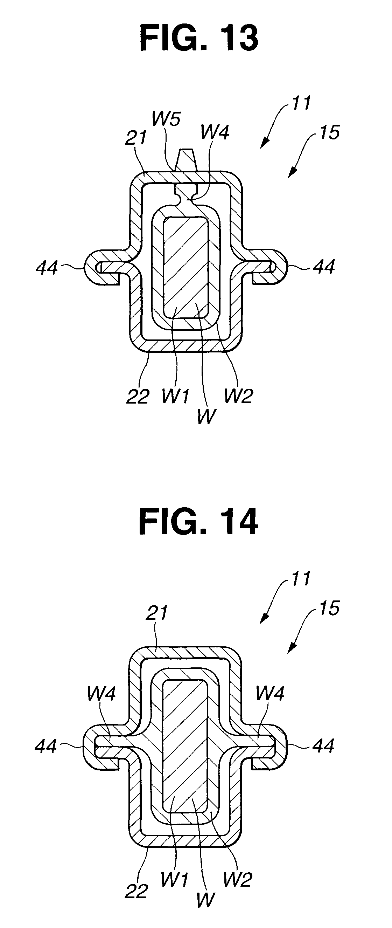

The weight W is movable inside the weight receptacle B. Otherwise, the weight W can be connected to the weight receptacle B for support by providing a deformable leg member which is formed integrally with the cover member W2 or separately from the cover member W2 and is oriented to a predetermined direction. More specifically, as is seen in Fig. 13, there is provided a leg member W4 protruding on a first side (upper in Fig. 13) of the cover member W2. There is also provided an engagement member W5 at a tip end of the leg member W4. The engagement member W5 is press-fitted into a through hole in the upper shell 21 in such a manner as to be resiliently deformed. Thereby, the engagement member W5 is partially drawn out of the weight receptacle B for engagement. According to the eighth embodiment in Fig. 13, the weight body W1 of the weight W causes a phase difference in vibration relative to vibration of the steering wheel 1. Thereby, the weight body W1 vibrates rightward and leftward in Fig. 13. The thus vibrating weight W impinges on the internal wall of the weight receptacle B, to thereby improve vibration characteristic.

Described below is the weight W, according to a ninth embodiment of the present invention.

As is seen in Fig. 14, the leg member W4 protrudes from the cover member W2 in a plurality of directions. More specifically, in Fig. 14, rightward and leftward. The tip end of each of the leg members W4 is put between the upper shell 21 and the lower shell 22, and is fixed with the wrapper 44. In Fig. 14, the weight body W1 vibrates upward and downward so as to abut on the internal wall of the weight receptacle B, to thereby improve vibration characteristic.

Described below is the weight W, according to a tenth embodiment of the present invention.

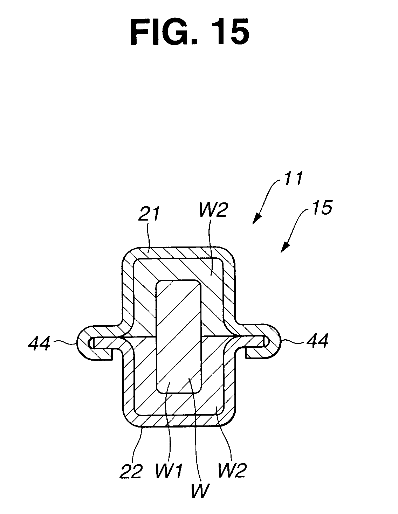

Each of the above embodiments shows a space which is defined on at least one of the external periphery and the internal periphery of the cover member W2 in the weight receptacle B. To the contrary, as is seen in Fig. 15, the cover member W2 (extremely soft) keeps an entire circumference of at least a part of the area between the internal wall of the weight receptacle B and the weight body W1. The cover member W2 (extremely soft) in Fig. 15 is formed, for example, by winding a pair of sheets (made of urethane) around the external periphery of the weight body W1 in such a manner that the pair of the sheets oppose each other, or by injecting polyurethane (featuring high foaming and low density) into the weight receptacle B.

Described below is the weight W, according to an eleventh embodiment of the present invention.

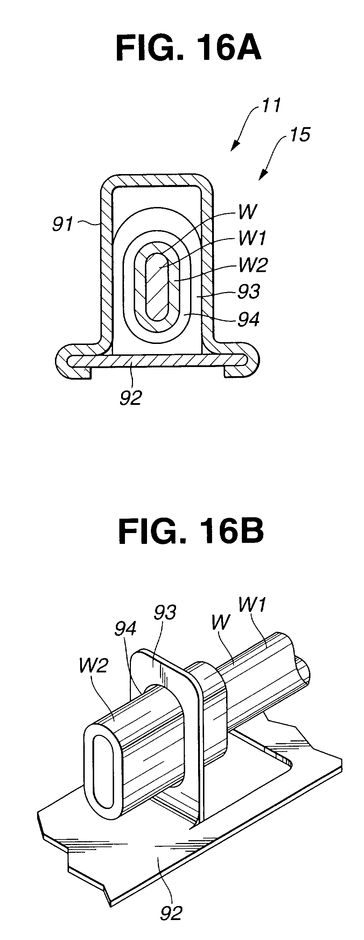

In the above embodiments, the weight W abuts on the internal wall of the weight receptacle B, that is, abuts on the flat base portion 41 or the wall portion 42 of the rim core metal 15. In the eleventh embodiment, however, the weight W can abut on (or impinge on) a bent portion bent from the base portion 41 or the wall portion 42. More specifically, as is seen in Fig. 16A and Fig. 16B, an upper shell 91 and a lower shell 92 constituting the core metal 11 are different in configuration from each other. The upper shell 91 is shaped substantially into a container (or a cap). The lower shell 92 is a flat bottom plate covering an opening on a downside of the upper shell 91, and is connected to the upper shell 91 in such a manner as to be wrapped by the upper shell 91. As is seen in Fig. 16B, a bracket portion 93 is cut and raised (bent) from the lower shell 92. The weight W is movably inserted into an insertion hole 94 defined in the bracket portion 93. Thereby, the weight W is allowed to impinge on an edge of the insertion hole 94 of the bracket portion 93, to thereby improve vibration characteristic.

Each of an upper shell and a lower shell constituting the core metal 11 is made of a steel (Fe) plate which is subjected to press molding. Otherwise, one of the upper shell and the lower shell (or both of the upper shell and the lower shell) made of magnesium (Mg) alloy, aluminum (Al) alloy and the like can be subjected to die-cast molding or press molding. Still otherwise, one of the upper shell and the lower shell (or both of the upper shell and the lower shell) can be made of hard plastic.

Moreover, in terms of the rim core metal 15, the upper shell 21 and the lower shell 22 have substantially the same configuration. On the contrary, the upper shell 21 and the lower shell 22 can have different configurations from each other. More specifically, one is shaped substantially into a vessel, and the other is shaped into a cover for covering an opening of the vessel.

Described below is the weight W, according to a twelfth embodiment of the present invention.

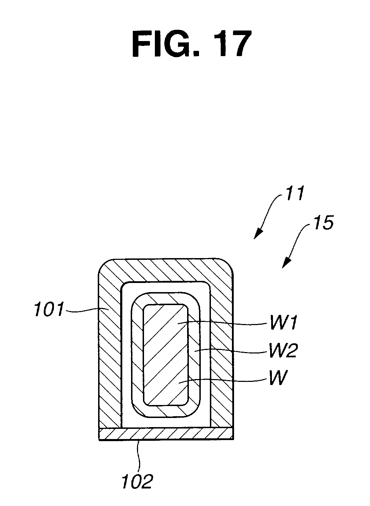

As is seen in Fig. 17, there is provided an upper shell 101 (made of alloy) which has a cross section shaped substantially into alphabetical U through die-casting and the like. There is also provided a lower shell 102 which is a flat bottom plate for covering an opening formed along a longitudinal direction of the upper shell 101. The lower shell 102 is welded to the upper shell 101, to thereby constitute the core metal 11. In the thus constituted core metal 11, the cover portion 12 covering the rim core metal 15 and the like is more preferably made of polypropylene (Fig. 2) through injection molding, rather than polyurethane and the like through insert molding. For constituting the upper shell 101 having the cross section shaped substantially into alphabetical U, the rim core metal 15 is not necessarily closed like a tube. In other words, the lower shell 102 (bottom plate) can be omitted. For omission of the lower shell 102, however, a leg member and the like should restrict (damp) vibration of the weight W rightward and leftward in Fig. 17.

Described below is the weight W, according to a thirteenth embodiment of the present invention.

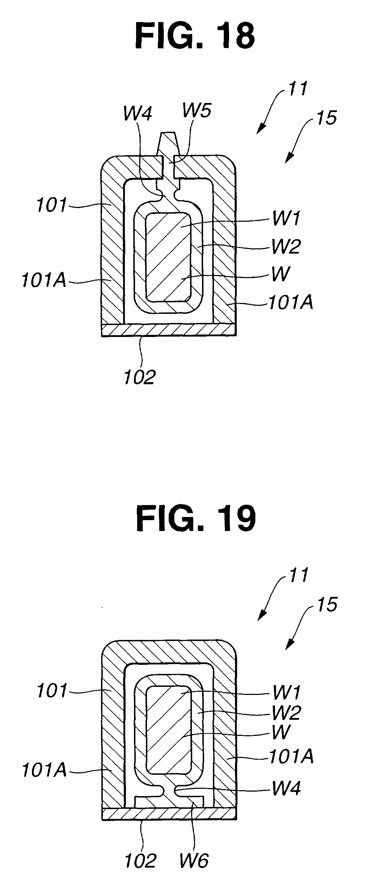

With the constitution of the core metal 11 having the upper shell 101 and the lower shell 12 which are different from each other in configuration, as is seen in Fig. 18 (like in Fig. 13), the leg member W4 protrudes on a first side (upper in Fig. 18) of the cover member W2. The engagement member W5 disposed at the tip end (upper in Fig. 18) of the leg member W4 is press-fitted into a through hole defined in the upper shell 101 in such a manner as to be resiliently deformed. Thereby, the engagement member W5 is partially drawn out of the weight receptacle B for engagement. As a result, the weight W is so supported as to make a reciprocal movement between a wall portion 101A and an opposing wall portion 101A.

Described below is the weight W, according to a fourteenth embodiment of the present invention.

As is seen in Fig. 19, there is provided a fixture W6 at the tip end (lower in Fig. 19) of the leg member W4. The fixture W6 is adhered to the lower shell 102 (bottom plate) and the like through curing or with another type of adhesive. Moreover, the fixture W6 can be secured integrally to the lower shell 102 through insert molding by inserting the lower shell 102 (bottom plate) into the metal mold.

Although the present invention has been described above by reference to fourteen embodiments, the present invention is not limited to these fourteen embodiments described above. Modifications and variations of the embodiments described above can be made by those skilled in the art, in light of the above teachings.

More specifically, the steering wheel 1 is not limited to the constitution described above. For example, instead of being three in number, the spoke portion 7 (or the spoke core metal 17) can be one, two, or four and more in number. Furthermore, instead of being mounted in advance, the cover member 12 for covering the core metal 11 can be the one formed through the following sequential steps: mounting the core metal 11 on the metal mold, injecting resin, and insert molding.

The entire contents of basic Japanese Patent Application No. P2000-244696 (filed August 11, 2000) of which priority is claimed is incorporated herein by reference.

The scope of the present invention is defined with reference to the following claims.

## Claims

1. A steering wheel comprising:
a core metal comprising:
a boss core metal connected to a steering shaft;
a rim core metal; and
a spoke core metal connecting the boss core metal and the rim core metal;
a receptacle disposed in the rim core metal, the receptacle being hollow and having an internal wall portion; and
a weight movably received in the receptacle so as to impinge on the internal wall portion of the receptacle.

2. The steering wheel as claimed in claim 1, in which the receptacle is disposed in the rim core metal in an area including a position which is the remotest from a connection portion connecting the spoke core metal and the rim core metal.

3. The steering wheel as claimed in claim 1, in which the weight comprises:
a weight body, and
a silencer disposed between the weight body and the internal wall portion of the receptacle.

4. The steering wheel as claimed in claim 1, in which
the receptacle is disposed on an upper side of a rim portion of the steering wheel, and
a connection portion connecting the spoke core metal and the rim core metal is disposed on a lower side of the rim portion.

5. The steering wheel as claimed in claim 1, in which the weight is in a form of a circular arc having a curvature substantially equal to a curvature of the rim core metal.

6. The steering wheel as claimed in claim 3, in which
the weight body is made of one selected from a group consisting of iron, lead, copper, brass and ceramic, and
the silencer is made of rubber.

7. A steering wheel comprising:
a core metal comprising:
a boss core metal connected to a steering shaft,
a rim core metal having a hollow portion, and
a spoke core metal connecting the boss core metal and the rim core metal,
the boss core metal, the rim core metal and the spoke core metal constituting a first half shell and a second half shell combined with the first half shell;
a receptacle defined in the hollow portion disposed integrally in the rim core metal, and having an internal wall portion; and
a weight movably received in the receptacle so as to impinge on the internal wall portion of the receptacle.

8. The steering wheel as claimed in claim 7, in which the receptacle is disposed in the rim core metal in an area including a position which is the remotest from a connection portion connecting the spoke core metal and the rim core metal.

9. The steering wheel as claimed in claim 7, in which the weight comprises:
a weight body, and
a silencer disposed between the weight body and the internal wall portion of the receptacle.

10. The steering wheel as claimed in claim 7, in which
the receptacle is disposed on an upper side of a rim portion of the steering wheel, and
a connection portion connecting the spoke core metal and the rim core metal is disposed on a lower side of the rim portion.

11. A steering wheel comprising:
a rim core metal defining a position which is disposed substantially at an upper end of the rim core metal, comprising:
a rim upper portion comprising:
a pair of an upper first bead and an upper second bead which are disposed, respectively, on a first side of the position and a second side of the position, and
a rim lower portion connected with the rim upper portion, comprising:
a pair of a lower first bead and a lower second bead which are disposed, respectively, on the first side of the position and the second side of the position;
a receptacle disposed integrally in the rim core metal, the receptacle being hollow and having an internal wall portion; and
a weight movably received in the receptacle so as to impinge on the internal wall portion of the receptacle.

12. The steering wheel as claimed in claim 11, in which
the upper first bead and the upper second bead have a predetermined distance therebetween circumferentially along the rim core metal, and protrude downward toward the rim core metal, and
the lower first bead and the lower second bead have a predetermined distance therebetween circumferentially along the rim core metal, and protrude upward toward the rim core metal.

13. The steering wheel as claimed in claim 12, in which
each of the upper first bead and the upper second bead is monolithic with the rim upper portion, is substantially triangular in plan view, and defines an engagement surface which is substantially perpendicular to a direction along a surface of the rim upper portion and constitutes an internal wall portion, and
each of the lower first bead and the lower second bead is monolithic with the rim lower portion, is substantially triangular in plan view, and defines an engagement surface which is substantially perpendicular to a direction along a surface of the rim lower portion and constitutes an internal wall portion.

14. The steering wheel as claimed in claim 13, in which
the engagement surface of the upper first bead and the engagement surface of the upper second bead oppose each other, while the engagement surface of the lower first bead and the engagement surface of the lower second bead oppose each other, to thereby constitute the receptacle.
